# EUROPEAN PATENT APPLICATION

(11) **EP 3 474 294 A1**
(43) Date of publication of application: **24.04.2019**
(21) Application number: 18196680.5
(22) Date of filing: 25.09.2018
(51) Int. Cl.: H01B 3/44, C08F 2/48, C08F 283/00, H01B 13/06, B29C 35/10, B05D 7/20, B05D 3/06, B05D 5/12, H01B 13/00, H01B 13/16

(54) **METHOD AND APPARATUS FOR CURING INSULATING MATERIAL ON SURFACE OF COPPER WIRE BY USING UV-LED LIGHT SOURCE**

(30) Priority: 18.10.2017 CN 201710970400
(71) Applicant: Zhuhai Ronsen Super Micro-Wire Co., Ltd, 519040 Zhuhai, Guangdong (CN)
(72) Inventor: XU, Licun, Zhuhai, Guangdong 519040 (CN)
(74) Representative: Raynor, Simon Mark

(57) **Abstract**

The present invention discloses a method and an apparatus for curing insulating material on a surface of a copper wire by using a UV-LED light source. The method for curing the insulating material on the surface of the copper wire by using the UV-LED light source mainly comprises the step of irradiating the copper wire with light waves, wherein the special insulating material and special apparatus are adopted. According to the present invention, the method is simple; cold light irradiation is adopted; volatilization consumption of the insulating material is avoided; the physical safety is prevented from being hurt by volatiles; a large amount of energy is prevented from being wasted; the work efficiency can be improved; and the proposal of energy conservation and environmental protection is met.

## Description

### Technical Field

The present invention relates to the technical field of copper wire production, and in particular, to a method and an apparatus for curing an insulating material on a surface of a copper wire by using a UV-LED light source.

### Background Art

In the technical field of varnished wire production, insulating varnish attached to the surface of the copper wire is dried by utilizing a high temperature heating method currently. Since the high temperature method is adopted, the insulating varnish will generate a large amount of carcinogenic volatiles under a high temperature condition, and the insulating varnish will deteriorate greatly with a huge amount of energy consumed. The volatiles will damage physical safety of the workers and cause pollution to the environment. The deterioration of the insulating varnish results in a lower effective utilization rate, with increased invisible costs caused. Particularly, a large amount of heat energy is consumed due to the heating method, leading to a big deal of energy expenses, and resulting in high costs.

### Summary of the Invention

The technical problem to be solved by the invention is to eliminate deficiencies of the prior art, thus providing a method and an apparatus for curing an insulating material on a surface of a copper wire by using a UV-LED light source. The method is simple; cold light irradiation is adopted; volatilization and deterioration of the insulating material is avoided; the physical safety is prevented from being damaged by volatiles; a large amount of energy is prevented from being wasted; the work efficiency can be improved; and the proposal of energy conservation and environmental protection is met.

The technical solution of the invention is as follows:
A method for curing an insulating material on a surface of a copper wire by using a UV-LED light source, wherein the method comprises the step of:
S1: irradiating the copper wire with light waves.

Further, in the step of S1, the wavelength range of the light waves is 365nm to 405nm.

Even further, in the step of S1, the wavelength of the light waves is any one or any combination of 365nm, 370nm, 375nm, 380nm, 385nm, 390nm, 395nm, 400nm and 405nm.

As an optimization, in the step of S1, the wavelength of the light waves is 405nm.

Further, in the step of S1, the range of the conveying speed of the copper wire is 2m/min to 30m/min.

Even further, in the Step of S1, the conveying speed of the copper wire is any one of 5m/min, 10m/min, 15m/min, 20m/min, 25m/min and 30m/min.

The formulation of the insulating material intends not to limit used varieties, and examples of the formulation are provided as follows.

An insulating material applied to the method for curing the insulating material on the surface of the copper wire by using the light waves, wherein the insulating material comprises the following components in parts by mass:

| | |
|---|---|
| resin | 80-100 parts; |
| LED-UV monomer | 25-35 parts; |
| photoinitiator | 5-15 parts; |
| reactive diluent | 5-15 parts. |

The insulating material further comprises 5-8 parts of auxiliary photoinitiator and 0.08-0.15 parts of additive.

Further, the insulating material comprises 100 parts of resin, 35 parts of LED-UV monomer, 15 parts of photoinitiator and 15 parts of reactive diluent; or the insulating material comprises 80 parts of resin, 25 parts of LED-UV monomer, 5 parts of photoinitiator and 5 parts of reactive diluent; or the insulating material comprises 100 parts of resin, 25 parts of LED-UV monomer, 5 parts of photoinitiator and 5 parts of reactive diluent.

Further, the resin is any one or several of phenolic resin, amine-modified epoxy acrylate resin, amine-modified polyester acrylate resin, PP polyester acrylate, modified polyester acrylate, chlorinated polyester acrylate, mercapto-group modified epoxy acrylic resin, mercapto-group modified polyurethane acrylic resin and mercapto-group modified polyester acrylic resin.

Further, the LED-UV monomer is iso-decyl methacrylate, or tetrahydrofurfuryl methylacrylate. Further, the photoinitiator is 2-ethylhexyl 4-(dimethylamino)benzoate.

Further, the reactive diluent is dipropylene glycol diacrylate, or tripropylene glycol diacrylate, or trimethylolpropane triacrylate.

Further, the auxiliary photoinitiator is amines like ethanolamine, or aliphatic tertiary amine. Further, the additive is a fluorocarbon modified levelling agent.

An apparatus applied to the method for curing the insulating material on the surface of the copper wire by using the light waves, wherein the apparatus comprises:
a box body, wherein a cavity is formed in the box body, a wire feed port is formed in one end of the box body and a wire discharge port is formed in the other end of the box body;
a UV-LED light source module, wherein the UV-LED light source module is fixedly arranged on the box body; and
a control system, wherein the control system is electrically connected with the UV-LED light source module.

The UV-LED light source module comprises a housing, a plurality of UV-LED light-emitting chips distributed at one end of the housing in an arrayed manner and arranged inside the cavity, and a heat radiator fixedly arranged at the other end of the housing and arranged outside the cavity; and the control system comprises a power supply module, a central processing module electrically connected with the power supply module, a driving module electrically connected with the central processing module, and an input module electrically connected with the central processing module.

All the UV-LED light-emitting chips form an annular passage, one end of the annular passage is close to the wire feed port, and the other end of the annular passage is close to the wire discharge port.

Further, the heat radiator is annular, the annular heat radiator sleeves around the outer side of the box body, and the heat radiator comprises a main body contacted with the box body and a plurality of cooling fins distributed on the main body in an arrayed manner.

Further, the control system is electrically connected with a fan, and the fan faces the heat radiator and is fixedly arranged at the exterior of the box body.

As an optimization, a plurality of UV-LED light source modules distributed in a linearly arranged manner are arranged in the box body, and the wavelengths of light waves emitted by all the UV-LED light source modules are subject to gradient distribution, that is, the wavelengths of the light waves in the box body are subject to gradient distribution from one end to the other end, so that the effect is better.

Further, a temperature sensor is arranged in the box body and is electrically connected with the control system, and the temperature sensor is used for monitoring whether a temperature in the box body will be excessively high due to other causes, or an indoor temperature is excessively high.

As an optimization, the apparatus may comprise a conveying device, and the conveying device is used for conveying the copper wire and is electrically connected with the control system.

As an optimization, the apparatus may comprise a wire arrangement mechanism, and the wire arrangement mechanism is fixedly arranged on the box body and is used for arranging the copper wire.

As an optimization, the apparatus may comprise an insulating material loading device, and the insulating material loading device is used for attaching the insulating material to the surface of the copper wire for light irradiation in a later stage.

According to the present invention, the method is simple; cold light irradiation is adopted; volatilization consumption of the insulating material is avoided; the physical safety is prevented from being hurt by volatiles; a large amount of energy is prevented from being wasted; the work efficiency can be improved; and the proposal of energy conservation and environmental protection is met.

### Brief Description of the Drawings

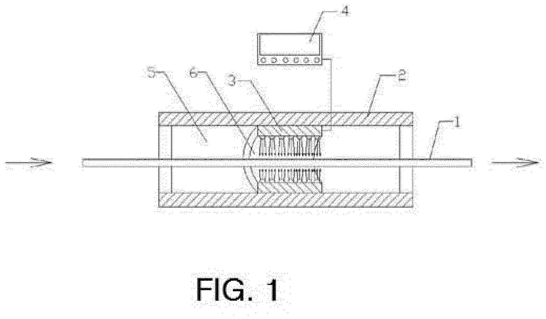

Figure 1 is a structural diagram of apparatus of the invention.

### Detailed Description of the Invention

As shown in Fig.1, a method for curing an insulating material on a surface of a copper wire by using a UV-LED light source, wherein the method comprises the step of:
S1: irradiating the copper wire with light waves.

Further, in the step of S1, the wavelength range of the light waves is 365nm to 405nm.

Even further, in the step of S1, the wavelength of the light waves is any one or any combination of 365nm, 370nm, 375nm, 380nm, 385nm, 390nm, 395nm, 400nm and 405nm.

As an optimization, in the step of S1, the wavelength of the light waves is 405nm.

Further, in the step of S1, the range of the conveying speed of the copper wire is 2 m/min to 30m/min.

Even further, in the step of S1, the conveying speed of the copper wire is any one of 5m/min, 10m/min, 15m/min, 20m/min, 25m/min and 30m/min.

An insulating material applied to the method for curing the insulating material on the surface of the copper wire by using the light waves, wherein the insulating material comprises the following components in parts by mass:

| | |
|---|---|
| resin | 80-100 parts; |
| LED-UV monomer | 25-35 parts; |
| photoinitiator | 5-15 parts; |
| reactive diluent | 5-15 parts. |

The insulating material further comprises 5-8 parts of auxiliary photoinitiator and 0.08-0.15 parts of additive.

Further, the insulating material comprises 100 parts of resin, 35 parts of LED-UV monomer, 15 parts of photoinitiator and 15 parts of reactive diluent; or the insulating material comprises 80 parts of resin, 25 parts of LED-UV monomer, 5 parts of photoinitiator and 5 parts of reactive diluent; or the insulating material comprises 100 parts of resin, 25 parts of LED-UV monomer, 5 parts of photoinitiator and 5 parts of reactive diluent.

Further, the resin is any one or several of phenolic resin, amine-modified epoxy acrylate resin, amine-modified polyester acrylate resin, PP polyester acrylate, or modified polyester acrylate, chlorinated polyester acrylate, mercapto-group modified epoxy acrylic resin, mercapto-group modified polyurethane acrylic resin and mercapto-group modified polyester acrylic resin.

Further, the LED-UV monomer is iso-decyl methacrylate, or tetrahydrofurfuryl acrylate.

Further, the photoinitiator is 2-ethylhexyl 4-(dimethylamino)benzoate.

Further, the reactive diluent is dipropylene glycol diacrylate, or tripropylene glycol diacrylate, or trimethylolpropane triacrylate.

Further, the auxiliary photoinitiator is amine like ethanolamine, or aliphatic tertiary amine. Further, the assistant is a fluorocarbon modified levelling agent.

An apparatus applied to the method for curing the insulating material on the surface of the copper wire by using the light waves, wherein the apparatus comprises:
a box body 2, wherein a cavity 5 is formed in the box body 2, a wire feed port is formed in one end of the box body 2 and a wire discharge port is formed in the other end of the box body 2;
a UV-LED light source module 3, which is fixedly arranged on the box body 2; and a control system 4, which is electrically connected with the UV-LED light source module 3.

The UV-LED light source module 3 comprises a housing, a plurality of UV-LED light-emitting chips distributed at one end of the housing in an arrayed manner and arranged inside the cavity 5, and a heat radiator fixedly arranged at the other end of the housing and arranged outside the cavity 5; and the control system 4 comprises a power supply module, a central processing module electrically connected with the power supply module, a driving module electrically connected with the central processing module, and an input module electrically connected with the central processing module.

All the UV-LED light-emitting chips form an annular passage 6, one end of the annular passage 6 is close to the wire feed port, and the other end of the annular passage 6 is close to the wire discharge port.

Further, the heat radiator is annular, the annular heat radiator sleeves around the outer side of the box body, and the heat radiator comprises a main body contacted with the box body, and a plurality of cooling fins distributed on the main body in an arrayed manner.

Further, the control system is electrically connected with a fan, and the fan faces the heat radiator and is fixedly arranged at the exterior of the box body.

As an optimization, a plurality of UV-LED light source modules distributed in a linearly arranged manner are arranged in the box body, and the wavelengths of light waves emitted by all the UV-LED light source modules are subject to gradient distribution, that is, the wavelengths of the light waves in the box body are subject to gradient distribution from one end to the other end, so that the effect is better.

Further, a temperature sensor is arranged in the box body and is electrically connected with the control system, and the temperature sensor is used for monitoring whether a temperature in the box body will be excessively high due to other causes, or an indoor temperature is excessively high.

As an optimization, the apparatus may comprise a conveying device, and the conveying device is used for conveying the copper wire and is electrically connected with the control system.

As an optimization, the apparatus may comprise a wire arrangement mechanism, and the wire arrangement mechanism is fixedly arranged on the box body and is used for arranging the copper wire.

As an optimization, the apparatus may comprise an insulating material loading device, and the insulating material loading device is used for attaching the insulating material to the surface of the copper wire for light irradiation in a later stage.

The present invention has the following advantages: the method is simple; cold light irradiation is adopted; volatilization consumption of the insulating material is avoided; the physical safety is prevented from being hurt by volatiles; a large amount of energy is prevented from being wasted; the work efficiency can be improved; and the proposal of energy conservation and environmental protection is met.

## Claims

1. A method for curing an insulating material on a surface of a copper wire, wherein the method comprises the step of utilizing a UV-LED light source to irradiate the surface of the copper wire to which the insulating material is attached with light waves.

2. The method of claim 1, wherein the wavelength range of the light waves is 365nm to 405nm, preferably, the wavelength is any one or any combination of 365nm, 370nm, 375nm, 380nm, 385nm, 390nm, 395nm, 400nm and 405nm, and more preferably, the wavelength is 405nm.

3. The method of claim 1 or 2, wherein the UV-LED light source is fixed, the range of a conveying speed of the copper wire is 2m/min to 30m/min, and preferably, the conveying speed is any one of 5m/min, 10m/min, 15m/min, 20m/min, 25m/min and 30m/min.

4. The method of any one of claims 1 to 3, wherein the insulating material comprises, in parts by mass: 80-100 parts of resin, 25-35 parts of LED-UV monomer, 5-15 parts of photoinitiator and 5-15 parts of reactive diluent.

5. The method of claim 4, wherein the resin is any one or several of phenolic resin, amine-modified epoxy acrylate resin, amine-modified polyester acrylate resin, PP polyester acrylate, modified polyester acrylate, chlorinated polyester acrylate, mercapto-group modified epoxy acrylic resin, mercapto-group modified polyurethane acrylic resin and mercapto-group modified polyester acrylic resin; the LED-UV monomer is iso-decyl methacrylate, or tetrahydrofurfuryl acrylate; the photoinitiator is 2-ethylhexyl 4-(dimethylamino)benzoate; and the reactive diluent is dipropylene glycol diacrylate, tripropylene glycol diacrylate, or trimethylolpropane triacrylate.

6. The method of claim 4 or 5, wherein the insulating material further comprises, in parts by mass: 5-8 parts of auxiliary photoinitiator and 0.08-0.15 parts of additive.

7. The method of claim 6, wherein the auxiliary photoinitiator is ethanolamine or aliphatic tertiary amine; and the additive is a fluorocarbon modified levelling agent.

8. An apparatus capable of realizing the method for curing an insulating material on a surface of a copper wire of any one of claims 1 to 7, wherein the apparatus comprises:
a box body (2), wherein a cavity (5) is formed in the box body (2), a wire feed port is formed in one end of the box body (2) and a wire discharge port is formed in the other end of the box body (2);
a UV-LED light source module (3), wherein the UV-LED light source module (3) is fixedly arranged on the box body (2) and is used for irradiating the cavity (5) with the light waves; and
a control system (4), wherein the control system (4) is electrically connected with the UV-LED light source module (3).

9. The apparatus of claim 8, wherein a plurality of UV-LED light source modules (3) distributed in a linearly arranged manner are arranged in the box body (2), and the wavelengths of light waves emitted by all the UV-LED light source modules (3) are subject to gradient distribution.

10. The apparatus of claim 8 or 9, wherein the UV-LED light source module (3) comprises UV-LED light-emitting chips arranged in the cavity (5); and preferably, all the UV-LED light-emitting chips form an annular passage (6), one end of the annular passage (6) is close to the wire feed port, and the other end of the annular passage (6) is close to the wire discharge port.

11. The apparatus of any one of claims 8 to 10, wherein the apparatus further comprises a heat radiator arranged outside the cavity (5); and preferably, the heat radiator is annular, the annular heat radiator is sleeved around the outer side of the box body (2), and the heat radiator comprises a main body contacted with the box body (2) and a plurality of cooling fins distributed on the main body in an arrayed manner.

12. The apparatus of claim 11, wherein the apparatus further comprises a fan, and the fan faces the heat radiator and is fixedly arranged at the exterior of the box body (2); and preferably, the fan is electrically connected with the control system (4).

13. The apparatus of any one of claims 8 to 12, wherein a temperature sensor is arranged in the box body (2) and is electrically connected with the control system (4).

14. The apparatus of any one of claims 8 to 13, wherein the apparatus further comprises:
a conveying device, the conveying device used for conveying the copper wire and electrically connected with the control system (4);
a wire arrangement mechanism, the wire arrangement mechanism fixedly arranged on the box body (2) and used for arranging the copper wire; and/or
an insulating material loading device, the insulating material loading device used for attaching the insulating material to the surface of the copper wire.

15. The apparatus of any one of claims 8 to 14, wherein the control system (4) comprises a power supply module, a central processing module electrically connected with the power supply module, a driving module electrically connected with the central processing module, and an input module electrically connected with the central processing module.
